# EUROPÄISCHE PATENTSCHRIFT

(11) **EP 2 981 387 B1**
(45) Veröffentlichungstag und Bekanntmachung des Hinweises auf die Patenterteilung: **22.05.2019**
(21) Anmeldenummer: 14709709.1
(22) Anmeldetag: 13.03.2014
(51) Int. Cl.: B23K 26/06, B23K 26/073, G02B 27/09

(54) **VORRICHTUNG ZUR ERZEUGUNG VON LASERSTRAHLUNG MIT EINER LINIENFÖRMIGEN INTENSITÄTSVERTEILUNG**
DEVICE FOR GENERATING LASER RADIATION HAVING A LINEAR INTENSITY DISTRIBUTION
DISPOSITIF POUR PRODUIRE UN RAYONNEMENT LASER AYANT UNE RÉPARTITION D'INTENSITÉ LINÉAIRE

(30) Priorität: 05.04.2013 DE 102013103422
(43) Veröffentlichungstag der Anmeldung: 10.02.2016
(73) Patentinhaber: LIMO GmbH, 44319 Dortmund (DE)
(72) Erfinder: LISSOTSCHENKO, Vitalij, 58730 Fröndenberg (DE); HARTEN, Paul Alexander, 45133 Essen (DE)
(74) Vertreter: Basfeld, Rainer
(86) Internationale Anmeldenummer: PCT/EP2014/055029
(87) Internationale Veröffentlichungsnummer: WO 2014/161710

(56) Entgegenhaltungen:
- US-A1- 2003 089 691
- US-A1- 2007 054 443
- US-A1- 2007 295 974
- HOMBURG O ET AL: "Gaussian-to-top-hat beam shaping: an overview of parameters, methods, and applications", LASER RESONATORS, MICRORESONATORS, AND BEAM CONTROL XIV, SPIE, 1000 20TH ST. BELLINGHAM WA 98225-6705 USA, Bd. 8236, Nr. 1, 9. Februar 2012 (2012-02-09), Seiten 1-9, XP060001726, DOI: 10.1117/12.907914 [gefunden am 1901-01-01]
- "Efficient Transformation of Gaussian Beams into Uniform, Rectangular Intensity Distributions", , 1. Juni 2011 (2011-06-01), XP055121931, Gefunden im Internet: URL:http://www.coherent.de/fileadmin/redak teur/pdf/LMC_pdf/Structured_Light_WP_Final _June_2011.pdf [gefunden am 2014-06-05]

## Beschreibung

Die vorliegende Erfindung betrifft eine Vorrichtung zur Erzeugung von Laserstrahlung mit einer linienförmigen Intensitätsverteilung gemäß Anspruch 1. Definitionen: Mit Laserstrahl, Lichtstrahl, Teilstrahl oder Strahl ist, wenn nicht ausdrücklich etwas anderes angegeben ist, kein idealisierter Strahl der geometrischen Optik gemeint, sondern ein realer Lichtstrahl, wie beispielsweise ein Laserstrahl mit einem Gauß-Profil oder einem modifizierten Gauß-Profil oder einem Top-Hat-Profil, der keinen infinitesimal kleinen, sondern einen ausgedehnten Strahlquerschnitt aufweist. Mit Top-Hat-Verteilung oder Top-Hat-Intensitätsverteilung oder Top-Hat-Profil ist eine Intensitätsverteilung gemeint, die sich zumindest hinsichtlich einer Richtung im Wesentlichen durch eine Rechteckfunktion (rect (x)) beschreiben lässt. Dabei sollen reale Intensitätsverteilungen, die Abweichungen von einer Rechteckfunktion im Prozentbereich beziehungsweise geneigte Flanken aufweisen, ebenfalls als Top-Hat-Verteilung oder Top-Hat-Profil bezeichnet werden können.

Eine Vorrichtung der eingangs genannten Art ist aus der DE 10 2007 001 639 A1 bekannt. Bei der darin beschriebenen Vorrichtung sind eine Mehrzahl von Laserlichtquellen im Multi-Mode-Betrieb vorgesehen. Deren Laserstrahlungen werden in einem stabförmigen Homogenisator durchmischt und dabei mit sich selbst überlagert. Anschließend werden sie von Kollimier- und Fokussierlinsen in eine linienförmige Intensitätsverteilung in einer Arbeitsebene überführt. Derartige Lasersysteme mit Linienfokus und einer homogenen Intensitätsverteilung sind bislang in vielen technischen Anwendungen mit Multi-Moden-Laserquellen bekannt und im Einsatz. Der physikalische Grund dafür ist, dass sich die Strahlung von Multi-Moden-Lasern in Strahlbündel aufteilen lässt und sich diese Strahlbündel anschließend nahezu ohne Interferenzstreifen optisch überlagern und durchmischen beziehungsweise homogenisieren lassen. So lassen sich aus Multi-Moden-Laserquellen homogene Lichtfelder fast beliebiger Geometrie erzeugen. Technisch eingesetzt werden insbesondere rechteckige und linienförmige Lichtfelder mit rechteckiger Top-Hat-Intensitätsverteilung.

Als problematisch dabei erweist es sich, dass sich für die in der DE 10 2007 001 639 A1 beschriebene Homogenisierung und Überlagerung Grundmoden-Laser nicht eignen. Grundmoden-Laser sind heute in den meisten Fällen mit dem altbekannten Punktfokus im Einsatz. In wenigen Ausnahmefällen werden bei Grundmodenlasern Strahlformungsoptiken verwendet, deren Funktionsweise physikalisch grundlegend anders ist als bei Multi-Moden-Lasern: Die Strahlung von Grundmodenlasern ist sehr kohärent, so dass bei Überlagerung mit sich selbst starke Interferenzstreifen entstehen. Die bei Grundmodenlasern verwendete Strahlformung erfolgt daher im Stand der Technik über Beugungseffekte, das bedeutet diffraktiv beziehungsweise per kohärenter Verformung der Wellenfront.

Eine Vorrichtung zur Erzeugung von Laserstrahlung mit einer linienförmigen Intensitätsverteilung, wobei die Laserlichtquellen als Faserlaser ausgebildet sind, ist in der US2007/0054443 A1 offenbart. Das der vorliegenden Erfindung zugrunde liegende Problem ist die Schaffung einer Vorrichtung der eingangs genannten Art, die trotz der Verwendung von Grundmodenlasern eine vergleichsweise homogene linienförmige Intensitätsverteilung in einer Arbeitsebene erzeugen kann.

Dies wird erfindungsgemäß durch eine Vorrichtung mit den Merkmalen des Anspruchs 1 erreicht. Die Unteransprüche betreffen bevorzugte Ausgestaltungen der Erfindung.

Gemäß Anspruch 1 ist vorgesehen, dass die Laserlichtquellen als Grundmodenlaser ausgebildet sind und die Vorrichtung derart gestaltet ist, dass eine jede der von den Laserlichtquellen ausgehenden Laserstrahlungen nicht mit sich selbst überlagert wird. Auf diese Weise ergeben sich nicht die störenden Interferenzstreifen, die kohärentes Licht bei Überlagerung mit sich selbst erzeugt.

Dass das Licht der einzelnen Grundmodenlaser nicht mit sich selbst überlagert wird, kann insbesondere durch Verzicht auf typische Multilinsen-Homogenisierer gewährleistet werden. Derartige Multilinsen-Homogenisierer teilen die Laserstrahlung in eine Vielzahl von Teilstrahlen auf und überlagern diese anschließend mit sich selbst.

Es kann vorgesehen sein, dass die Laserlichtquellen Laserstrahlung mit einer Beugungsmaßzahl M² von weniger als 2,0, insbesondere von weniger als 1,5, vorzugsweise von weniger als 1,3 erzeugen können, beispielsweise Laserstrahlung mit einer Beugungsmaßzahl M² von 1,05 erzeugen können.

Der am schnellsten wachsende Lasertyp nach Umsatz und Stückzahlen für alle Arten der Materialbearbeitung ist in den letzten Jahren der Faserlaser gewesen. In vielen Anwendungsbereichen zeigt der Faserlaser gegenüber traditionellen Festkörperlasern und Gaslasern deutliche Preis-Leistungs-Vorteile. Der Faserlaser zeichnet sich durch eine hohe Strahlqualität und Brillanz aus und hat neue Leistungsrekorde für die Materialbearbeitung aufgestellt. Beispielsweise sind Grundmodenlaser bis 50 kW kommerziell erhältlich. Durch die erfindungsgemäße Gestaltung besteht die Möglichkeit, mit den besonderen Eigenschaften des Faserlasers in neue, bislang unerreichte Intensitätsbereiche für Linienfokusanwendungen vorzustoßen.

Es kann vorgesehen sein, dass die Vorrichtung derart gestaltet ist, dass die linienförmige Intensitätsverteilung in der Arbeitsebene ein Verhältnis von Länge zu Breite von größer als 10, insbesondere größer als 20, vorzugsweise größer als 30 aufweist. Linienförmige Intensitätsverteilungen mit einem großen Aspektverhältnis sind für viele Anwendungen von besonderem Interesse.

Die Vorrichtung kann derart gestaltet sein, dass die von den einzelnen Laserlichtquellen ausgehenden Laserstrahlungen in der Arbeitsebene in Linienlängsrichtung im Wesentlichen nebeneinander angeordnet sind und zusammen die linienförmige Intensitätsverteilung bilden, wobei sich insbesondere lediglich die seitlichen Flanken der Intensitätsverteilungen der einzelnen Laserstrahlungen in Linienlängsrichtung überlappen. Auf diese Weise wird auch bei der Ausbildung der Linie ein unerwünschtes Überlagern der Laserstrahlungen vermieden.

Die Optikmittel können kollimierende und/oder abbildende Linsen umfassen.

Weiterhin besteht die Möglichkeit, dass die Optikmittel mindestens ein Transformationsbauteil umfassen, dass eine Gauß-Verteilung in eine Top-Hat-Verteilung umwandeln kann, wobei das Transformationsbauteil beispielsweise eine Powelllinse sein oder umfassen kann.

Insbesondere kann die Vorrichtung eine Mehrzahl von Transformationsbauteilen umfassen, von denen jeweils eines einer der Laserlichtquellen derart zugeordnet ist, dass die von einer ersten Laserlichtquelle ausgehende Laserstrahlung durch ein erstes Transformationsbauteil hindurch verläuft und die von einer zweiten Laserlichtquelle ausgehende Laserstrahlung durch ein zweites Transformationsbauteil hindurch verläuft. Auf diese Weise können in der Arbeitsebene vergleichsweise rechteckige Intensitätsverteilungen aneinander anschließen, so dass sich eine sehr gleichmäßige Linie ergibt.

Dabei kann das Transformationsbauteil oder ein jedes der Transformationsbauteile weiterhin durch die Transformation die von ihm transformierte Laserstrahlung homogenisieren, ohne dabei die jeweilige Laserstrahlung mit sich selbst zu überlagern. Dies insbesondere deshalb, weil das Transformationsbauteil oder ein jedes der Transformationsbauteile wie eine Phasenplatte die Energie in der Laserstrahlung umverteilt, ohne dabei eine Überlagerung vorzunehmen. Eine Überlagerung findet lediglich zwischen den benachbarten vergleichsweise rechteckige Intensitätsverteilungen statt, die in der Arbeitsebene aneinander anschließen. Diese sind aber nicht kohärent zueinander, so dass sich durch ihre Überlagerung keine störenden Interferenzstreifen ergeben.

Erfindungsgemäß umfasst die Vorrichtung Ferrulen für die Enden der Faserlaser oder für mit den Faserlasern verbundene Lichtleitfasern, wobei die den einzelnen Laserlichtquellen zugeordneten Ferrulen in mehreren gemeinsamen, insbesondere wärmeableitenden, Halterungen miteinander verbunden sind. Wegen der wärmeableitenden Halterungen können die Laserlichtquellen bei sehr hohen Leistungen betrieben werden. Um die Länge der Linie zu vergrößern, können mehrere dieser Halterungen in Linienlängsrichtung miteinander verbunden werden.

Es besteht die weiterhin Möglichkeit, dass die Optikmittel mindestens eine Halterung umfassen, die insbesondere wärmeableitend ausgebildet ist. Auch hier stellt die mindestens eine wärmeableitende Halterung sicher, dass die Laserlichtquellen bei sehr hohen Leistungen betrieben werden können.

Es kann vorgesehen sein, dass die mindestens eine Halterung der Ferrulen und die mindestens eine Halterung der Optikmittel zu mindestens einem Modul miteinander verbunden sind. Insbesondere kann dabei die Vorrichtung mehrere der die Halterungen umfassenden Module umfassen, die modular, insbesondere in Längsrichtung der zu erzeugenden Intensitätsverteilung, miteinander verbunden werden können. Auch auf diese Weise kann die Länge der Linie vergrößert werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Seitenansicht auf eine erste Ausführungsform einer erfindungsgemäßen Vorrichtung;
- Fig. 2: ein schematisches Diagramm, dass für die erste Ausführungsform hinsichtlich der Linienlängsrichtung die Erzeugung der linienförmigen Intensitätsverteilung in der Arbeitsebene verdeutlicht;
- Fig. 3: ein schematisches Diagramm, dass hinsichtlich der Linienquerrichtung die Erzeugung der linienförmigen Intensitätsverteilung in der Arbeitsebene verdeutlicht;
- Fig. 4: ein schematisches Diagramm, dass Isointensitätslinien in der Arbeitsebene zeigt;
- Fig. 5: eine schematische Seitenansicht auf eine zweite Ausführungsform einer erfindungsgemäßen Vorrichtung;
- Fig. 6: ein schematisches Diagramm, dass für die zweite Ausführungsform hinsichtlich der Linienlängsrichtung die Erzeugung der linienförmigen Intensitätsverteilung in der Arbeitsebene verdeutlicht;
- Fig. 7: ein schematisches Diagramm, dass hinsichtlich der Linienquerrichtung die Erzeugung der linienförmigen Intensitätsverteilung in der Arbeitsebene verdeutlicht;
- Fig. 8: ein schematisches Diagramm, dass Isointensitätslinien in der Arbeitsebene zeigt.

In den Figuren sind gleiche oder funktional gleiche Teile oder Lichtstrahlen mit gleichen Bezugszeichen versehen. Weiterhin ist in einigen der Abbildungen ein Koordinatensystem angedeutet, um die Orientierung zu erleichtern.

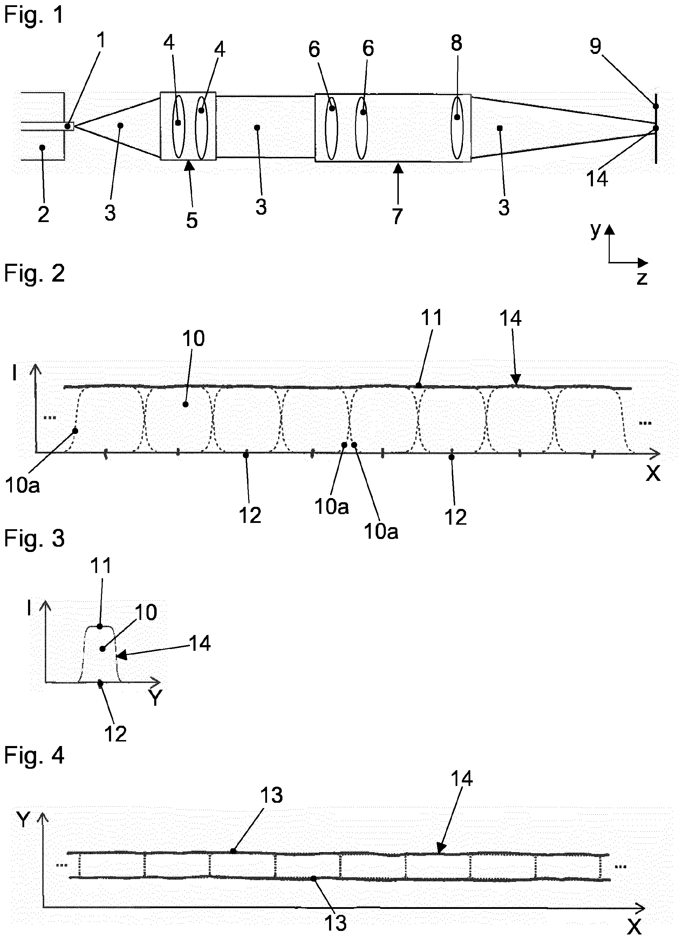

Die aus Fig. 1 ersichtlich erste Ausführungsform umfasst eine Mehrzahl von Laserlichtquellen, die als Grundmoden-Laser ausgebildet sind. In Fig. 1 ist das Ende einer Lichtleitfaser 1 abgebildet, die entweder Teil einer Faserlasers ist oder mit diesem verbunden ist. Die Lichtleitfaser 1 ist eine Grundmodenfaser. Die Laserlichtquellen und/oder die ausgangsseitigen Enden der Lichtleitfaser 1 sind in der sich in Fig. 1 in die Zeichenebene erstreckenden X-Richtung nebeneinander angeordnet.

An dem Ende einer jeden der Lichtleitfasern 1 ist eine wärmeleitende und thermisch optimierte Ferrule angeordnet. Die Ferrulen mehrerer Lichtleitfasern 1 sind in einer gemeinsamen Halterung 2 aufgenommen, die ebenfalls wärmeleitend und thermisch optimiert ausgebildet sind. Mehrere dieser Halterungen 2 können in X-Richtung linear nebeneinander angeordnet und insbesondere miteinander verbunden sein, so dass die lineare Anordnung der Faserenden sich auf eine beliebige Gesamtlänge ausdehnen lässt. Weiterhin können die Halterungen 2 Streulicht absorbieren.

In Ausbreitungsrichtung Z der aus den Enden der Lichtleitfasern 1 austretenden Laserstrahlungen 3 sind Optikmittel angeordnet, die im ersten Ausführungsbeispiel mindestens ein kollimierendes Linsenmittel 4, insbesondere mindestens ein kollimierendes Linsenarray umfassen. Dieses mindestens eine Linsenarray kann als Teleskop ausgebildet sein und linear einander gegenüberliegende Linsen aufweisen, deren Aperturen jeweils auf den Faserkernmittelpunkt einer zugeordneten Lichtleitfaser 1 zentriert sind. Das aus dem Faserende austretende Licht wird durch das zugeordnete beziehungsweise gegenüberliegende Teleskop kollimiert.

Die Vorrichtung umfasst weiterhin mindestens eine wärmeabführende Halterung 5 für das mindestens eine kollimierende Linsenmittel 4. Diese Halterung 5 kann aus einer wärmeleitenden und thermisch optimierten Fassung bestehen, welche das oder die Linsenmittel 4 trägt und Streulicht absorbiert.

Die erste Ausführungsform der Vorrichtung umfasst weiterhin mindestens ein Transformationsbauteil 6, insbesondere mindestens ein Linsenarray, das ein gaußförmiges Profil in ein Top-Hat-Profil umwandeln kann. Dabei kann jede der Linsen beziehungsweise gegenüberliegenden Linsen bei mehreren Linsenarrays so angeordnet sein, dass die Aperturen jeweils auf den Faserkernmittelpunkt einer zugeordneten Lichtleitfaser 1 zentriert sind.

Die erste Ausführungsform der Vorrichtung umfasst weiterhin mindestens eine wärmeabführende Halterung 7 für das mindestens eine Transformationsbauteil 6. Diese mindestens eine Halterung 7 kann aus einer wärmeleitenden und thermisch optimierten Fassung bestehen, welche das mindestens eine Transformationsbauteil 6 trägt und Streulicht absorbiert.

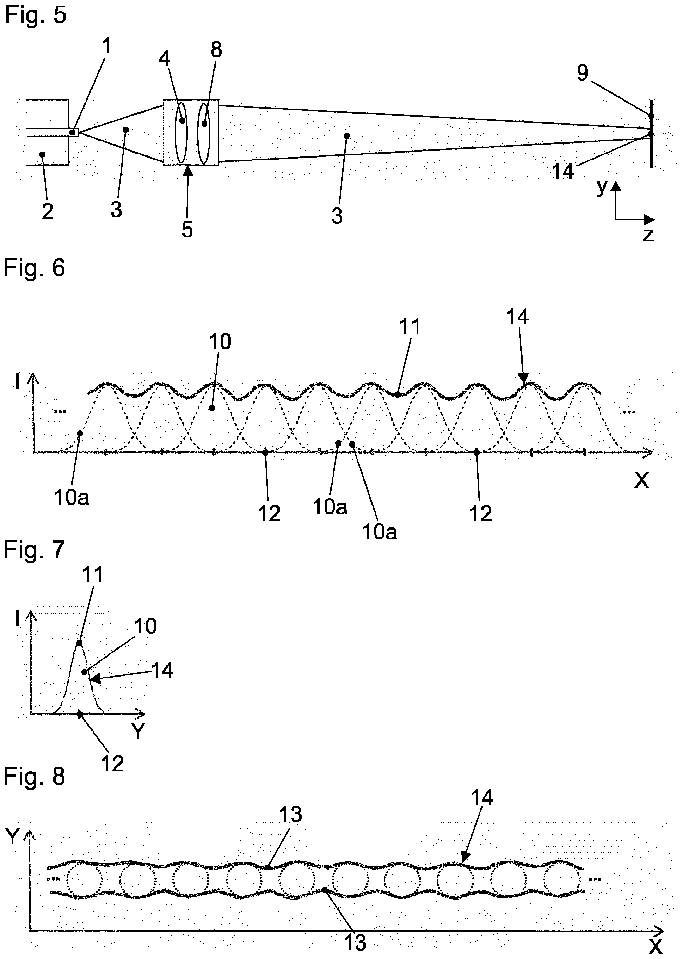

Die Optikmittel umfassen weiterhin mindestens ein fokussierendes Linsenmittel 8 oder mindestens ein fokussierendes Linsenarray, das die Laserstrahlungen 3 in eine Arbeitsebene 9 fokussieren können. Im abgebildeten Ausführungsbeispiel ist das mindestens eine fokussierende Linsenmittel 8 in der gleichen Halterung 7 untergebracht wie das mindestens eine Transformationsbauteil 6. Es besteht jedoch durchaus auch die Möglichkeit, das mindestens eine fokussierende Linsenmittel 8 separat oder in der Halterung 4 unterzubringen, wie dies bei der zweiten Ausführungsform gemäß Fig. 5 der Fall ist.

Die Länge der Linsenmittel 4 sowie der Transformationsbauteile 6 und deren Halterungen 5, 7 ist auf die Länge der Halterungen 2 der Faserenden so abgestimmt, dass die Halterungen 2, 5, 7 gegenüberliegender Faserenden und Linsenmittel 4 sowie Transformationsbauteile 6 zu opto-mechanischen, thermisch gekoppelten Einheiten (Submodulen) kombiniert werden können.

Die als Linsenarrays ausgebildeten Transformationsbauteile 6 bestehen aus linear gegenüberliegend als Array angeordneten Linsen, welche aus jedem kollimierten Strahl eine rechteckige Intensitätsverteilung 10, insbesondere in der Arbeitsebene 9, erzeugen. Die Strahlprofile resultierend aus der Strahlung aus den einzelnen Faserenden und zughörigen Linsen besitzen seitliche Flanken 10a mit solchen Intensitätsabfällen entlang der langen Achsen (X-Richtung), dass sich die seitliche Flanke 10a einer Intensitätsverteilung 10 mit der seitlichen Flanke 10a der angrenzenden Intensitätsverteilung 10 zu einer ununterbrochen gleichförmigen linienartigen Intensitätsverteilung 11 der zusammengesetzten Laserstrahlung 14 überlagert.

Dies ist in Fig. 2 verdeutlicht, in der die Intensität I in der Arbeitsebene gegen die X-Richtung aufgetragen ist. Unterhalb der jeweiligen Intensitätsverteilungen 10 ist mit 12 die Lage der Bildschwerpunkte der Faserenden bezeichnet. In Fig. 3 ist entsprechend die Intensität I in der Arbeitsebene gegen die Y-Richtung aufgetragen.

Fig. 4 zeigt eine Isointensitätslinie 13 in der Arbeitsebene 9. Dabei setzt sich die Isointensitätslinie 13 nach rechts und links in Fig. 4 noch weiter fort, insbesondere wenn eine in Linienlängsrichtung (X-Richtung) sehr lange linienförmige Intensitätsverteilung 11 erzeugt werden soll. Die Isointensitätslinie 13 verdeutlicht näherungsweise einen Schnitt durch die Laserstrahlung 14 in der Arbeitsebene.

Bei der Ausführungsform gemäß Fig. 5 ist kein Transformationsbauteil 6 beziehungsweise Linsenarray für die Umwandlung von einem Gauß-Profil in ein Top-Hat-Profil vorgesehen. Daher kann dort beispielsweise das mindestens eine fokussierende Linsenmittel 8 oder das mindestens ein fokussierendes Linsenarray in der Halterung 4 untergebracht werden.

Aufgrund des fehlenden Transformationsbauteils 6 für die Umwandlung von einem Gauß-Profil in ein Top-Hat-Profil weisen die einzelnen Intensitätsprofile 10 in der Arbeitsebene 9 eine Gaußform auf. Auch bei der zweiten Ausführungsform überlagern sich die einzelnen Intensitätsprofile 10 zu einer ununterbrochen linienartigen Intensitätsverteilung 11 der zusammengesetzten Laserstrahlung 14. Diese ununterbrochen linienartige Intensitätsverteilung 11 ist ungleichförmig. Ihre Schwankungen sind jedoch für viele Anwendungen tolerierbar.

Dies ist in Fig. 6 verdeutlicht, in der die Intensität I in der Arbeitsebene gegen die X-Richtung aufgetragen ist. Unterhalb der jeweiligen Intensitätsverteilungen 10 ist mit 12 wiederum die Lage der Bildschwerpunkte der Faserenden bezeichnet. In Fig. 7 ist entsprechend die Intensität I in der Arbeitsebene gegen die Y-Richtung aufgetragen.

Fig. 8 zeigt wiederum eine Isointensitätslinie 13 in der Arbeitsebene 9. Dabei setzt sich die Isointensitätslinie 13 nach rechts und links in Fig. 8 noch weiter fort, insbesondere wenn eine in Linienlängsrichtung (X-Richtung) sehr lange linienförmige Intensitätsverteilung 11 erzeugt werden soll. Die Isointensitätslinie 13 ist aufgrund des gaußförmigen Profils der einzelnen Teil-Laserstrahlungen 3 ebenfalls leicht ungleichförmig.

Bei beiden Ausführungsformen ist der Abstand (Pitch) in Linienlängsrichtung X der Ferrulen einer der Designparameter, mit dem die Intensität des Linienfokus auf den gewünschten Wert einstellt werden kann. Der Pitch ist nach unten begrenzt (und die erreichbare Linienfokusintensität ist nach oben begrenzt) durch die mechanische Stabilität der Halterung, die notwendige Wärmetransportrate und die minimale Aperturgröße und Brennweite der Mikrolinsen des Kollimationsarrays.

### Beispiel 1:

In einer beispielhaften Ausführungsform können kommerziell erhältliche, wassergekühlte IPG Fiber Laser YLR SM mit einer jeweiligen Leistung von 1 kW und einer Beugungsmaßzahl von M²=1,05 verwendet werden.

Weiterhin können als Lichtleitfasern 1 Single-Mode-Fasern verwendet werden, deren Numerische Apertur 0,1 betragen kann.

Die minimale Brennweite der Linsen in den Linsenarrays kann 0,3 mm betragen. Die minimale Aperturgröße der Linsen in den Linsenarrays kann ebenfalls 0,3 mm betragen. Dadurch können Spotgrößen in der Arbeitsebene von 0,06 mm erreicht werden.

Die Intensität bei voller Ausleuchtung der Apertur kann 1,41 MW/cm² betragen. Die Ausdehnung der einzelnen rechteckigen Intensitätsverteilung 10 kann beispielsweise in der lange Achse (X-Richtung) 2 mm und in der kurzen Achse (Y-Richtung) 0,05 mm betragen.

Durch die Aneinanderreihung der einzelnen Intensitätsverteilungen 10 kann sich eine Linienleistung von 0,5 kW/mm beziehungsweise eine Linienintensität von 1000 kW/cm² ergeben.

## Patentansprüche

1. Vorrichtung zur Erzeugung von Laserstrahlung (14) mit einer linienförmigen Intensitätsverteilung (11), umfassend
- eine Mehrzahl von Laserlichtquellen zur Erzeugung von Laserstrahlung (3), wobei die Laserlichtquellen jeweils als Faserlaser ausgebildet sind, wobei die Vorrichtung Ferrulen für die Enden der Faserlaser oder für mit den Faserlasern verbundene Lichtleitfasern (1) umfasst und wobei die den einzelnen Laserlichtquellen zugeordneten Ferrulen in mehreren gemeinsamen Halterungen (2) miteinander verbunden sind,
- Optikmittel zur Überführung der von den Laserlichtquellen ausgehenden Laserstrahlungen (3) in eine Laserstrahlung (14), die in einer Arbeitsebene (9) eine linienförmige Intensitätsverteilung (11) aufweist,
wobei die Laserlichtquellen als Grundmodenlaser ausgebildet sind und die Vorrichtung derart gestaltet ist, dass eine jede der von den Laserlichtquellen ausgehenden Laserstrahlungen (3) nicht mit sich selbst überlagert wird, derart, dass auf Multilinsen-Homogenisierer, die die Laserstrahlung in eine Vielzahl von Teilstrahlen aufteilen und anschließend mit sich selbst überlagern, verzichtet wird, wobei die Vorrichtung derart gestaltet ist, dass die von den einzelnen Laserlichtquellen ausgehenden Laserstrahlungen (3) in der Arbeitsebene (9) in Linienlängsrichtung (X) im Wesentlichen nebeneinander angeordnet sind und zusammen die linienförmige Intensitätsverteilung (11) der Laserstrahlung (14) bilden, und wobei mehrere der Halterungen (2) für die Ferrulen in Linienlängsrichtung miteinander verbunden werden können, um die Länge der linienförmigen Intensitätsverteilung (11) zu vergrößern.

2. Vorrichtung nach Anspruch 1, **dadurch gekennzeichnet, dass** die Laserlichtquellen Laserstrahlung (3) mit einer Beugungsmaßzahl M² von weniger als 2,0, insbesondere von weniger als 1,5, vorzugsweise von weniger als 1,3 erzeugen können, beispielsweise Laserstrahlung (3) mit einer Beugungsmaßzahl M² von 1,05 erzeugen können.

3. Vorrichtung nach einem der Ansprüche 1 oder 2, **dadurch gekennzeichnet, dass** die Vorrichtung derart gestaltet ist, dass die linienförmige Intensitätsverteilung (11) in der Arbeitsebene (9) ein Verhältnis von Länge zu Breite von größer als 10, insbesondere größer als 20, vorzugsweise größer als 30 aufweist.

4. Vorrichtung nach einem der Ansprüche 1 bis 3, **dadurch gekennzeichnet, dass** sich lediglich die seitlichen Flanken (10a) der Intensitätsverteilungen (10) der einzelnen Laserstrahlungen (3) in Linienlängsrichtung (X) überlappen.

5. Vorrichtung nach einem der Ansprüche 1 bis 4, **dadurch gekennzeichnet, dass** die Optikmittel kollimierende und/oder abbildende Linsenmittel (4, 8) umfassen.

6. Vorrichtung nach einem der Ansprüche 1 bis 5, **dadurch gekennzeichnet, dass** die Optikmittel mindestens ein Transformationsbauteil (6) umfassen, dass eine Gauß-Verteilung in eine Top-Hat-Verteilung umwandeln kann, wobei das Transformationsbauteil (6) beispielsweise eine Powelllinse sein oder umfassen kann.

7. Vorrichtung nach Anspruch 6, **dadurch gekennzeichnet, dass** die Vorrichtung eine Mehrzahl von Transformationsbauteilen (6) umfasst, von denen jeweils eines einer der Laserlichtquellen derart zugeordnet ist, dass die von einer ersten Laserlichtquelle ausgehende Laserstrahlung (3) durch ein erstes Transformationsbauteil (6) hindurch verläuft und die von einer zweiten Laserlichtquelle ausgehende Laserstrahlung (3) durch ein zweites Transformationsbauteil (6) hindurch verläuft.

8. Vorrichtung nach einem der Ansprüche 1 bis 7, **dadurch gekennzeichnet, dass** die mehreren gemeinsamen Halterungen (2) wärmeableitend sind.

9. Vorrichtung nach Anspruch 8, **dadurch gekennzeichnet, dass** die Optikmittel mindestens eine Halterung (5, 7) umfassen, die insbesondere wärmeableitend ausgebildet ist.

10. Vorrichtung nach Anspruch 9, **dadurch gekennzeichnet, dass** die mindestens eine Halterung (2) der Ferrulen und die mindestens eine Halterung (5, 7) der Optikmittel zu mindestens einem Modul miteinander verbunden sind.

11. Vorrichtung nach Anspruch 10, **dadurch gekennzeichnet, dass** die Vorrichtung mehrere der die Halterungen (2, 5, 7) umfassenden Module umfasst, die modular, insbesondere in Längsrichtung (X) der zu erzeugenden Intensitätsverteilung (11), miteinander verbunden werden können.

## Claims

1. Device for generating laser radiation (14) having a linear intensity distribution (11), comprising
- a plurality of laser light sources for generating laser radiation (3), wherein the laser light sources are respectively designed as optical fibre lasers, wherein the device comprises ferrules for the ends of the optical fibre lasers or for light-conducting fibres (1) connected with the optical fibre lasers and wherein the ferrules assigned to the individual laser light sources are connected with one another in several shared holders (2),
- optical means for the transferral of the laser radiations (3) emanating from the laser light sources into a laser radiation (14) which on a work plane (9) has a linear intensity distribution (11),
wherein the laser light sources are formed as fundamental mode lasers and the device is designed such that each of the individual laser radiations (3) emanating from the laser light sources is not superimposed on itself, such that multi-lens homogenisers, which divide the laser radiation into a plurality of partial radiations and subsequently superimpose it on itself, are dispensed with,
wherein the device is designed such that the laser radiations (3) emanating from the individual laser light sources are disposed on the work plane (9) in linear longitudinal direction (X) substantially next to one another and together form the linear intensity distribution (11) of the laser radiation (14), and wherein several of the holders (2) for the ferrules can be connected with one another in linear longitudinal direction, in order to increase the length of the linear intensity distribution (11).

2. Device according to claim 1, **characterised in that** the laser light sources are able to generate laser radiation (3) having a beam quality factor M² of less than 2.0, in particular of less than 1.5, preferably of less than 1.3, for example are able to generate laser radiation (3) having a beam quality factor M² of 1.05.

3. Device according to any of claims 1 or 2, **characterised in that** the device is designed such that the linear intensity distribution (11) on the work plane (9) has a ratio of length to breadth of greater than 10, in particular greater than 20, preferably greater than 30.

4. Device according to any of claims 1 to 3, **characterised in that** only the lateral flanks (10a) of the intensity distributions (10) of the individual laser radiations (3) overlap in linear longitudinal direction (X).

5. Device according to any of claims 1 to 4, **characterised in that** the optical means comprise collimating and/or imaging lens means (4, 8).

6. Device according to any of claims 1 to 5, **characterised in that** the optical means comprise at least one transformation component (6) which can transform a Gaussian distribution into a top hat distribution, wherein the transformation component (6) can be or comprise for example a Powell lens.

7. Device according to claim 6, **characterised in that** the device comprises a plurality of transformation components (6), of which respectively one is assigned to one of the laser light sources such that the laser radiation (3) emanating from a first laser light source travels through a first transformation component (6) and the laser radiation (3) emanating from a second laser light source travels through a second transformation component (6).

8. Device according to any of claims 1 to 7, **characterised in that** the several shared holders (2) are thermally-conductive.

9. Device according to claim 8, **characterised in that** the optical means comprise at least one holder (5, 7), which is in particular designed as thermally-conductive.

10. Device according to claim 9, **characterised in that** the at least one holder (2) of the ferrules and the at least one holder (5, 7) of the optical means are connected with one another to form at least one module.

11. Device according to claim 10, **characterised in that** the device comprises several of the modules comprising the holders (2, 5, 7), which can be connected with one another in a modular fashion, in particular in longitudinal direction (X) of the intensity distribution (11) to be generated.

## Revendications

1. Dispositif pour produire un rayonnement laser (14) avec une répartition d'intensité linéaire (11), comprenant
- une pluralité de sources de lumière laser pour produire un rayonnement laser (3), dans lequel les sources de lumière laser sont réalisées respectivement en tant que lasers à fibre, dans lequel le dispositif comprend des férules pour les extrémités des lasers à fibre ou pour des fibres optiques (1) reliées aux lasers à fibre et dans lequel les férules associées aux différentes sources de lumière laser sont reliées les unes aux autres dans plusieurs supports commun (2),
- des moyens optiques pour convertir les rayonnements laser (3) émis par les sources de lumière laser en un rayonnement laser (14), qui présente une répartition d'intensité linéaire (11) dans un plan de travail (9),
dans lequel les sources de lumière laser sont réalisées en tant que laser de mode fondamental et le dispositif est conçu de sorte qu'un chacun des rayonnements laser (3) émis par les sources de lumière laser n'est pas superposé avec lui-même de sorte qu'il est renoncé à des homogénéisateurs à lentille multiple, qui divisent le rayonnement laser en une pluralité de rayons partiels et ensuite se superposent avec eux-mêmes,
dans lequel le dispositif est conçu de sorte que les rayonnements laser (3) émis par les différentes sources de lumière laser dans le plan de travail (9) sont agencés sensiblement l'un à côté de l'autre dans la direction longitudinale de ligne (X) et forment conjointement la répartition d'intensité linéaire (11) du rayonnement laser (14), et
dans lequel plusieurs des supports (2) pour les férules peuvent être reliés les uns aux autres dans la direction longitudinale de ligne pour augmenter la longueur de la répartition d'intensité linéaire (11).

2. Dispositif selon la revendication 1, **caractérisé en ce que** les sources de lumière laser peuvent produire un rayonnement laser (3) avec une valeur de mesure de diffraction M² inférieure à 2,0, en particulier inférieure à 1,5, de préférence inférieure à 1,3, par exemple rayonnement laser (3) avec une valeur de mesure de diffraction M² de 1,05.

3. Dispositif selon l'une quelconque des revendications 1 ou 2, **caractérisé en ce que** le dispositif est conçu de sorte que la répartition d'intensité linéaire (11) dans le plan de travail (9) présente un rapport longueur largeur supérieur à 10, en particulier supérieur à 20, de préférence supérieure à 30.

4. Dispositif selon l'une quelconque des revendications 1 à 3, **caractérisé en ce que** seuls les flancs latéraux (10a) des répartitions d'intensité (10) des différents rayonnements laser (3) se chevauchent dans la direction longitudinale de ligne (X).

5. Dispositif selon l'une quelconque des revendications 1 à 4, **caractérisé en ce que** les moyens optiques comprennent des moyens à lentille (4, 8) de collimation et/ou d'imagerie.

6. Dispositif selon l'une quelconque des revendications 1 à 5, **caractérisé en ce que** les moyens optiques comprennent au moins un composant de transformation (6) qui peut convertir une répartition de Gauss en une répartition Top-Hat, dans lequel le composant de transformation (6) peut être ou comprendre par exemple une lentille de Powell.

7. Dispositif selon la revendication 6, **caractérisé en ce que** le dispositif comprend une pluralité de composants de transformation (6) desquels respectivement un d'une des sources de lumière laser est associée de sorte que le rayonnement laser (3) émis par une première source de lumière laser s'étend à travers un premier composant de transformation (6) et le rayonnement laser (3) émis par une deuxième source de lumière laser s'étend à travers un deuxième composant de transformation (6).

8. Dispositif selon l'une quelconque des revendications 1 à 7, **caractérisé en ce que** les plusieurs supports communs (2) dissipent la chaleur.

9. Dispositif selon la revendication 8, **caractérisé en ce que** les moyens optiques comprennent au moins un support (5, 7), qui est réalisé en particulier dissipant la chaleur.

10. Dispositif selon la revendication 9, **caractérisé en ce que** l'au moins un support (2) des férules et l'au moins un support (5, 7) des moyens optiques sont reliés les uns aux autres en au moins un module.

11. Dispositif selon la revendication 10, **caractérisé en ce que** le dispositif comprend plusieurs des modules comprenant les supports (2, 5, 7), qui peuvent être reliés les uns aux autres de manière modulaire, en particulier dans la direction longitudinale (X) de la répartition d'intensité (11) à produire.
